# EUROPÄISCHE PATENTSCHRIFT

(11) **EP 3 737 885 B1**
(45) Veröffentlichungstag und Bekanntmachung des Hinweises auf die Patenterteilung: **07.12.2022**
(21) Anmeldenummer: 18830835.7
(22) Anmeldetag: 21.12.2018
(51) Int. Cl.: F16L 53/38, F16L 37/098, F16L 33/01, F16L 11/15, F16L 25/00

(54) **KONFEKTIONIERTE FLUIDLEITUNG**
PREASSEMBLED FLUID LINE
CONDUITE DE FLUIDE PRÉASSEMBLÉE

(30) Priorität: 10.01.2018 DE 202018100115 U
(43) Veröffentlichungstag der Anmeldung: 18.11.2020
(73) Patentinhaber: Voss Automotive GmbH, 51688 Wipperfürth (DE)
(72) Erfinder: BAENSCH, Andreas, 50259 Pulheim (DE); MITTERER, Reiner, 51688 Wipperfürth (DE); RÖHRIG, Lukas, 51709 Marienheide (DE); SCHWARZKOPF, Otfried, 51515 Kürten (DE)
(74) Vertreter: Dr. Solf & Zapf Patent- und Rechtsanwalts PartG mbB
(86) Internationale Anmeldenummer: PCT/EP2018/086662
(87) Internationale Veröffentlichungsnummer: WO 2019/137807

(56) Entgegenhaltungen:
- WO-A1-2009/080477
- WO-A1-2009/080501
- WO-A2-2009/013342
- WO-A2-2015/135663
- DE-A1-102013 103 534
- DE-U1-202008 004 954

## Beschreibung

Die vorliegende Erfindung betrifft eine konfektionierte Fluidleitung.

Aus der EP 1 985 908 B1 ist eine konfektionierte Fluidleitung mit einem Leitungsverbinder bekannt, der aus einem Verbinderstück mit mindestens einem Anschlussabschnitt zur Anschlussverbindung einer Medienleitung besteht, wobei zumindest im Bereich des Übergangsabschnitts elektrische Heizmittel in einer den Strömungskanal zumindest teilweise umschließenden Anordnung vorgesehen sind. Aus der WO 2009/013342 A2 ist eine konfektionierte Medienleitung mit einem Leitungsverbinder bekannt, bestehend aus einem Verbinderkörper mit einem Anschlussabschnitt, an dem eine Fluidleitung angeschlossen ist, und mit einem Kupplungsabschnitt zum dichtenden Verbinden mit einem Gegenkupplungsteil, wobei die Fluidleitung mit einem Heizdraht versehen ist, und der Heizdraht im Verbindungszustand von dem Verbinderkörper und der Medienleitung derart weitergeführt ist, dass er zumindest teilweise am Kupplungsabschnitt angeordnet ist. Aus der WO 2012/065710 A2 ist eine konfektionierte elektrisch beheizbare Fluidleitung bekannt, wobei eine integrierte elektrische leitfähige Einrichtung am Rohrleitungsteil vorhanden ist, und wobei das Rohrleitungsteil einen Verbindungsabschnitt aufweist, der beispielsweise als Steckabschnitt ausgebildet ist, und wobei die elektrisch leitfähige Einrichtung sich bis nahe an den Verbindungsabschnitt erstreckt.

Aus der DE 20 2008 004954 U1 ist ein Leitungsverbinder für Medienleitungen bekannt, bestehend aus einem Fluidverbinder mit einem ersten Anschlussabschnitt zur Anschlussverbindung mit einem Leitungsende einer Fluidleitung sowie mit einem an den ersten Anschlussabschnitt angrenzenden Übergangsabschnitt mit einem inneren Fluidkanal, wobei zumindest bereichsweise elektrische Heizmittel vorgesehen sind. Der Leitungsverbinder weist eine den Fluidverbinder zumindest im Bereich der Heizmittel umschließenden Kapselung mit einem Abzweig für elektrische Versorgungsleiter für die Heizmittel auf, wobei der Abzweig als separates, mit der Kapselung verbundenes Abzweigteil ausgebildet ist. Der erste Anschlussabschnitt ist bevorzugt als Aufnahme zum Einstecken des Leitungsendes ausgebildet, wobei vorzugsweise eine unlösbare, stoffschlüssige Verbindung durch Verkleben, Verschweißen oder An-/Umspritzen erfolgt, insbesondere durch Laserschweißen.

Bei dem Stand der Technik ist eine Beheizung im Bereich des Übergangsbereiches notwendig, und zwar um das darin aufzunehmende Medium gegen Einfrieren zu schützen, da der Übergangsbereich eine vergrößerte thermische Masse aufweist. Darüber hinaus ist es erforderlich, ein Hüllsystem vorzusehen, das auch den Übergangsabschnitt mit umschließt, woraus sich eine relativ große Baugröße ergibt. Hieraus resultieren erhöhte Kosten und insgesamt eine erhöhte notwendige Heizleistung, um ein Gefrieren des zu transportierenden Mediums zu verhindern. Der vorliegenden Erfindung liegt die Aufgabe zu Grunde, eine konfektionierte Leitung bereitzustellen, die kostengünstig herstellbar ist, wobei der Beheizungsaufwand gegenüber dem Stand der Technik verringert werden kann.

Erfindungsgemäß wird dies durch eine Konfektionierte Fluidleitung nach Anspruch 1 erreicht. Aufgrund der erfindungsgemäßen Ausgestaltung ist eine separate Beheizung des Anschlussverbinders nicht erforderlich, so dass die thermische Masse des Anschlussverbinders minimiert ist. Zudem ermöglicht die Erfindung, das Innenvolumen des Anschlussverbinders ebenfalls wesentlich zu reduzieren, denn das Innenvolumen der angeschlossenen Fluidleitung und das Innenvolumen des Anschlussverbinders können bei vergleichbarer Längserstreckung aneinander angeglichen werden. Der Anschlussverbinder kann kompakt in einer kurzen Bauform ausgestaltet werden, ohne dass hierdurch die Steckbarkeit des Verbinders beeinträchtigt wird. Die erfindungsgemäße Ausgestaltung ermöglicht, dass der Halteflansch innerhalb des Schutzgehäuses in Form eines Festlagers fixiert ist, wobei sich der Steckverbinder an das Hüllsystem anschließt, so dass das aus dem Schutzgehäuse und dem Mantelrohr bestehende Hüllsystem äußerst kompakt ausgebildet sein kann, da erfindungsgemäß kein Übergangsbereich vorhanden ist, der wie im Stand der Technik von einer Schutzhülle umgeben sein muss.

Es ist von Vorteil, wenn der Halteflansch in einer Lagerkammer des Schutzgehäuses umfangsgemäß formschlüssig fixiert ist, und die Lagerkammer in Einsteckrichtung gesehen unmittelbar an der dem Steckverbinder zugekehrten Gehäuseseite des Schutzgehäuses ausgebildet ist. Somit kann der Verbindungsabschnitt in Einsteckrichtung gesehen unmittelbar hinter dem Halteflansch aus dem Schutzgehäuse austreten, und das Schutzgehäuse kann am gegenüberliegenden Ende das Mantelrohr in Form eines Los-Lagers umfassen.

Es ist weiterhin von Vorteil, wenn die Länge des Verbindungsabschnittes gleich dem axialen Abstand zwischen der an dem Halteflansch angrenzenden Gehäusewand des Schutzgehäuses und dem Anfang des Kupplungsabschnitts des Steckverbinders ist, und wobei dieser axiale Abstand mindestens gleich der axialen Länge eines Übersteckbereiches des Muffenteils im Bereich seines Kupplungsabschnitts ist. Zweckmäßigerweise weist der Verbindungsabschnitt eine axiale Länge auf, die doppelt so groß ist wie die axiale Länge eines Übersteckbereiches des Muffenteils. Hierdurch wird einerseits eine sehr kurze Ausgestaltung des Verbindungsabschnitts erreicht, und andererseits jedoch eine sichere Steckung des Steckverbinders gewährleistet. Es ist von Vorteil, wenn am Umfang des Verbindungsabschnitts zwischen dem Muffenteil und dem Schutzgehäuse ein elastisch verformbarer Dichtungsring unter axialer Vorspannung angeordnet ist. Hierdurch wird einerseits eine Abdichtung nach außen gewährleistet, und andererseits wird die Einraststellung des Steckverbinders im Muffenteil gesichert.

Vorteilhafte Ausführungen sind in den Unteransprüchen enthalten.

Das Schutzgehäuse kann auch zur Aufnahme einer elektrischen Anschlussverbindung zwischen der insbesondere aus einem Wickeldraht bzw. zwei Wickeldrähten ausgebildeten Heizeinrichtung verwendet werden, wobei die elektrische Verbindung insbesondere als Crimp-Verbindung ausgebildet sein kann und die Drahtenden im Bereich vor dem Heizeinrichtung freien Einsteckabschnitt miteinander verbindet. Die elektrische Verbindung kann auch zusätzlich zur Verbindung mit einer in das Schutzgehäuse eingeführten elektrischen Versorgungsleitung dienen.

Anhand der in den beiliegenden Zeichnungen dargestellten Ausführungsbeispielen wird die Erfindung näher erläutert. Es zeigen:
- Fig. 1: einen Längsschnitt durch eine erfindungsgemäße konfektionierte Leitung,
- Fig. 2: einen Längsschnitt durch eine Teilansicht einer erfindungsgemäßen konfektionierten Fluidleitung gemäß Fig. 1,
- Fig. 3: einen Längsschnitt durch einen erfindungsgemäßen Steckverbinder mit eingesteckter Fluidleitung zur Verwendung bei einer konfektionierten Fluidleitung gemäß Fig. 1,
- Fig. 4: eine alternative Ausführungsform eines erfindungsgemäßen Steckverbinders im Längsschnitt zur Verwendung bei einer konfektionierten Fluidleitung gemäß Fig. 1,
- Fig. 5: eine Seitenansicht einer weiteren Ausführungsform eines erfindungsgemäßen Steckverbinders, und
- Fig. 6 bis Fig. 8: Längsschnitte durch alternative Ausführungsformen eines erfindungsgemäßen Steckverbinders zur Verwendung bei einer Erfindungsgemäßen konfektionierten Leitung.

In den verschiedenen Figuren der Zeichnung sind gleiche Teile stets mit denselben Bezugszeichen versehen.

Zu der anschließenden Beschreibung wird betont, dass die Erfindung nicht auf die Ausführungsbeispiele

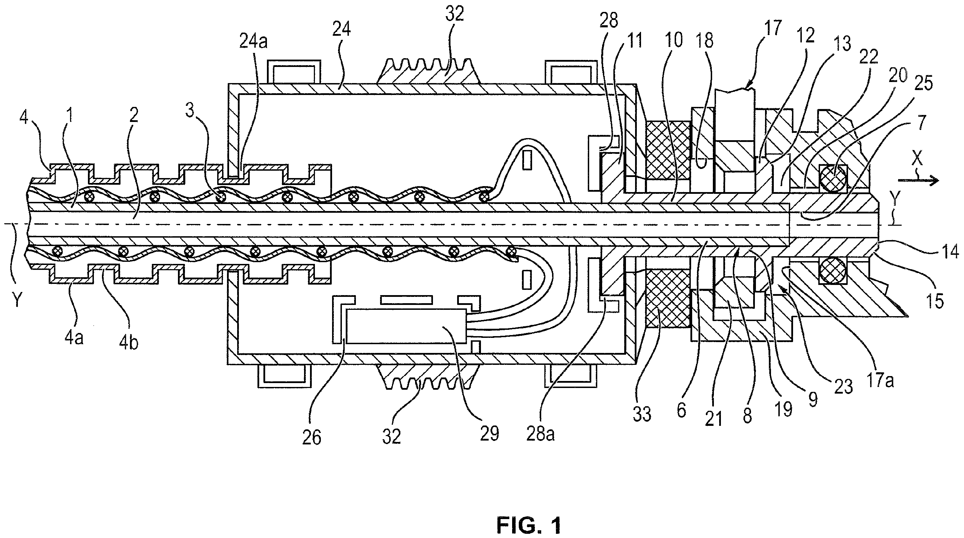

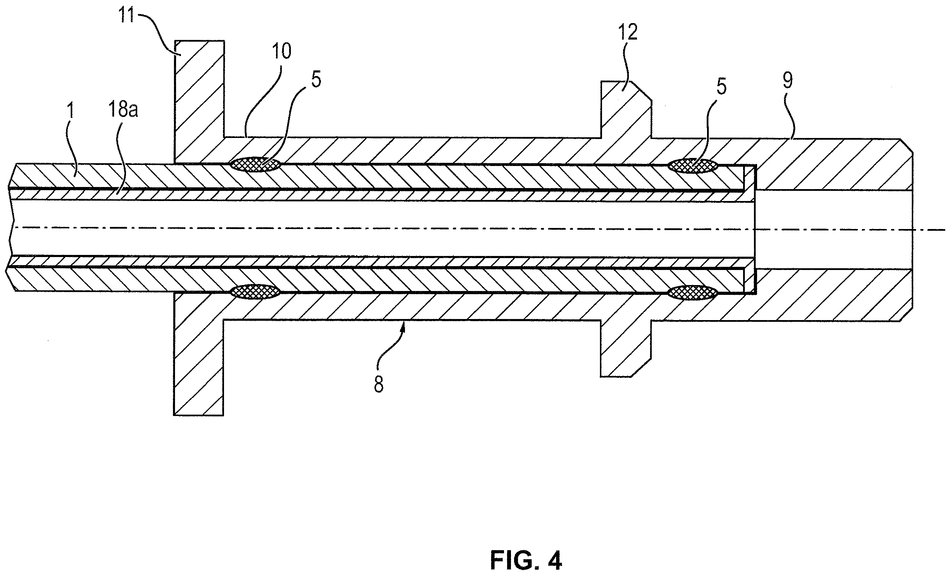

Wie in Figur 1 dargestellt ist, umfasst eine Ausführungsform einer erfindungsgemäßen konfektionierten Fluidleitung eine Fluidleitung 1, die zum Beispiel als Rohrleitung mit einem Durchflusskanal 2 für insbesondere eine Flüssigkeit ausgebildet ist. Diese Fluidleitung 1 ist insbesondere aus Kunststoff hergestellt. Die Fluidleitung 1 weist eine elektrische Heizeinrichtung 3 auf, die zum Beispiel als am äußeren Umfang der Fluidleitung 1 vorzugsweise spiralförmig verlaufendes Heizelement ausgebildet ist. Hierbei kann es sich um ein einzelnes elektrisch leitendes Drahtelement handeln, oder es können zum Beispiel auch zwei spiralförmig gewickelte elektrisch leitende Drahtelemente vorhanden sein, wie in Fig. 1 dargestellt. Indem die Heizelemente über die gesamte Länge der Fluidleitung 1 verlaufen, wird eine gleichmäßige Wärmeerzeugung bzw. -verteilung über die gesamte Leitungslänge bewirkt. Weiterhin kann in einer vorteilhaften Ausführung die Fluidleitung 1 einschließlich der Heizeinrichtung 3 in einem Mantelrohr 4 zum mechanischen Schutz und zur Wärmeisolierung verlaufen. Dieses Mantelrohr 4 kann vorzugsweise als Wellrohr ausgebildet sein, bei dem Wellenberge 4a und Wellentäler 4b in Längsrichtung des Mantelrohrs 4 in stetig wechselnder Abfolge nebeneinander ausgebildet sind. Die Fluidleitung 1 weist einen endseitigen Einsteckabschnitt 6 auf, von dem das Heizelement entfernt ist. Dieser Einsteckabschnitt 6 ist in einem inneren Durchgangskanal 7 eines rohrförmigen Steckverbinders 8 eingesteckt. Der Steckverbinder 8 ist vorzugsweise als Kunststoffteil, insbesondere Kunststoffspritzgussteil ausgeführt. Weiterhin besteht vorzugsweise zumindest abschnittsweise zwischen dem Einsteckabschnitt 6 und dem Steckverbinder 8 im inneren Durchgangskanal 7 eine Presspassung. Der Steckverbinder 8 umfasst einen Kupplungsabschnitt 9 und einen Verbindungsabschnitt 10. Der Kupplungsabschnitt 9 bildet das von der eingesteckten Fluidleitung 1 abgekehrte Ende des Steckverbinders 8, und der Verbindungsabschnitt 10 geht in den Kupplungsabschnitt 9 unmittelbar über und ist in Einsteckrichtung X gesehen dem Kupplungsabschnitt 9 vorgelagert. Am Anfang des Verbindungsabschnitts 10 weist dieser einen sich senkrecht zu einer mittleren Längsachse Y-Y des Steckverbinders 8 erstreckenden Halteflansch 11 auf. Dieser Halteflansch 11 ist insbesondere kreisringförmig ausgebildet. Der Halteflansch 11 weist insbesondere eine Höhe von 1 bis 3 mm, insbesondere 2 mm, gemessen vom äußeren Umfang des Steckverbinders 8 auf. Der Kupplungsabschnitt 9 besitzt einen senkrecht zur Längsachse Y-Y an seinem Umfang insbesondere kreisringförmigen Rastfortsatz 12. Dieser Rastfortsatz 12 weist insbesondere an seiner in Einsteckrichtung X weisenden Seitenfläche endseitig zum Beispiel eine umlaufende Schräge 13 auf. Eine endseitige Stirnfläche 14 des Steckverbinders 8 weist vorzugsweise an ihrem freien Ende eine Einführungsschräge 15 auf. Die radiale Höhe des Rastfortsatzes 12 beträgt insbesondere 1,125 mm bei einer so genannten 1/4" (Zoll) Steckverbindung oder insbesondere 1,5 mm bei einer so genannten 5/16" (Zoll) Steckverbindung. Insbesondere, wenn der Einsteckabschnitt 6 der Fluidleitung 1 hinter dem Rastfortsatz 12 endet, siehe Fig. 1 und 4, ist es zweckmäßig, wenn im Bereich vor dem Rastfortsatz 12 eine Spielpassung und dahinter eine Presspassung vorhanden ist.

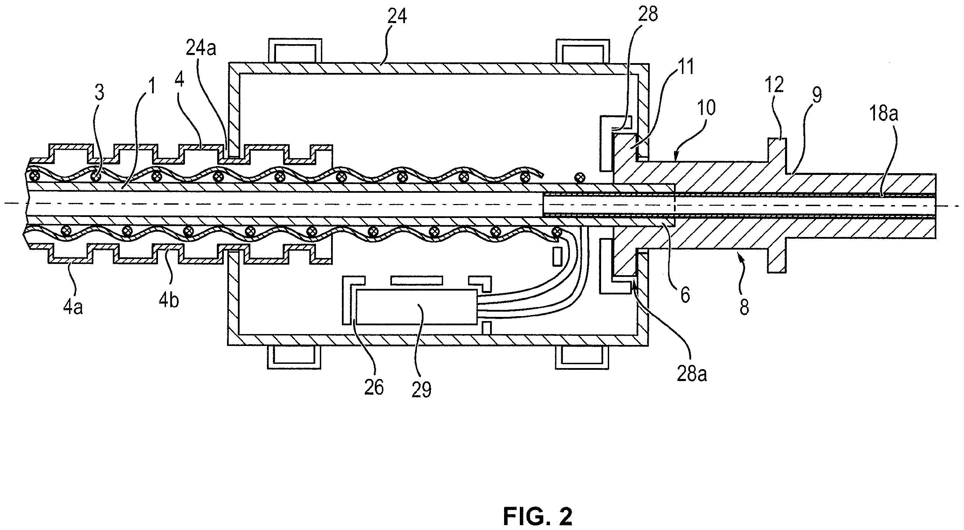

Wie in Figur 1 dargestellt ist, besitzen der Kupplungsabschnitt 9 und der Verbindungsabschnitt 10 den gleichen Außendurchmesser. Es kann ebenfalls vorteilhaft sein, wenn der Außendurchmesser des Verbindungsabschnitts 10 größer ist als der Außendurchmesser des Kupplungsabschnitts 9, siehe zum Beispiel Figur 2, zum Beispiel kann die Wandstärke des Verbindungsabschnitts 10 doppelt so groß sein wie die des Kupplungsabschnitts 9. Dies ist dann von Vorteil, wenn der Einsteckabschnitt 6 des Steckverbinders 8 kurz ist und zum Beispiel im Bereich des Verbindungsabschnitts 10 endet.

Es kann vorteilhaft sein, wenn der Innendurchmesser des Durchgangskanals 7 des Steckverbinders 8 im Einsteckbereich des Einsteckabschnitts 6 der Fluidleitung 1 derart um die doppelte Wandstärke des Einsteckabschnitts 6 der Fluidleitung 1 vergrößert ist gegenüber dem Durchmesser des Durchgangskanals 7 im übrigen Bereich des Steckverbinders 8, so dass sich keine Veränderung des Strömungsquerschnitts im Steckverbinder 8 ergibt, und der Strömungsquerschnitt der Fluidleitung 1 und der Strömungsquerschnitt des Durchgangskanals 7 gleich groß sind.

Zum Befestigen des Einsteckabschnitts 6 der Fluidleitung 1 mit dem Steckverbinder 8 werden beide Teile durch eine Laserverschweißung 5 miteinander verbunden.

Die konfektionierte Fluidleitung 1 wird mit dem Steckverbinder 8 in ein Muffenteil 17 bzw. eine Einsteckmuffe (Female Member) eingesteckt. Diese Einsteckmuffe bzw. dieses Muffenteil 17 weist eine Durchgangsöffnung 18 auf, in die der Steckverbinder 8 mit seinem Kupplungsabschnitt 9 eingesteckt wird bzw. ist, wobei die axiale Länge des Kupplungsabschnitts 9 der axialen Länge des Muffenteils 17 angepasst ist. Das Muffenteil 17 weist im Bereich der Durchgangsöffnung 18 zwei in axialer Richtung hintereinanderliegende Abschnitte auf, und zwar den in Einsteckrichtung X gesehen Rastabschnitt 19 und einen daran anschließenden Dichtabschnitt 20. Im Bereich des Rastabschnitts 19 besitzt das Muffenteil 17 radial, d. h. senkrecht zu ihrer Längsachse Y-Y spreizbare Rastmittel 21, die in ihrer Ausgangsstellung eine Durchstecköffnung umschließen, deren Durchmesser kleiner ist als der Außendurchmesser des Rastfortsatzes 12. Diese Rastmittel 21 wirken derart mit dem Rastfortsatz 12 des Steckverbinders 8 zusammen, dass beim Einstecken des Steckverbinders 8 die Rastmittel 21 mittels des Rastfortsatzes 12 derart gespreizt werden, dass der Kupplungsabschnitt 9 mit dem Rastfortsatz 12 bis zu einem inneren Anschlag 17a des Muffenteils 17 bzw. der Einsteckmuffe eingesteckt werden kann. Danach federn die Rastmittel 21 in ihre Ausgangslage zurück und fixieren den Steckverbinder 8 innerhalb der Durchgangsöffnung 18 des Muffenteils 17, siehe Fig. 1. Zwischen dem Anschlag 17a und den Rastmitteln 21 ist ein Übersteckbereich 22 ausgebildet. Die Länge des Verbindungsabschnitts 10, die gleich dem axialen Abstand zwischen der an dem Halteflansch 11 angrenzenden Gehäusewand des Schutzgehäuses 24 und dem Anfang des Kupplungsabschnitts 9 ist, ist mindestens gleich der axialen Länge des Übersteckbereiches 22.

Dieser Übersteckbereich 22 zwischen dem Beginn des Dichtabschnitts 20 und den dem Dichtabschnitt 20 zugekehrten seitlichen Endflächen der Rastmittel 21 bildet einen Freiraum 23 aus, dessen axiale Länge einem Übersteckmaß entspricht, zum Beispiel 0,4 bis 2,5 mm, insbesondere 1,5 bis 2 mm, um nach Beendigung des Einsteckvorgangs des Steckverbinders 8 ein zuverlässiges Rückfedern der Rastmittel 21 in ihre Ausgangslage zu gewährleisten. Die Höhe des Freiraums 23 ist derart, dass der Rastfortsatz 12 hierin mit umfangsgemäßem Spiel aufgenommen wird.

Die Durchgangsöffnung 18 weist im Bereich des Dichtabschnitts 20 einen Öffnungsdurchmesser auf, der dem Außendurchmesser des Kupplungsabschnitts 9 des Steckverbinders 8 derart angepasst ist, dass der Kupplungsabschnitt 9 mit einer Spielpassung im Dichtabschnitt 20 geführt ist. In einer inneren Ringnut der Durchgangsöffnung 18 im Bereich des Dichtabschnitts 20 ist eine Umfangsdichtung 25 angeordnet, die eine umfangsgemäße fluiddichte Abdichtung des Kupplungsabschnitts 9 innerhalb des Muffenteils 17 gewährleistet.

Das Muffenteil 17 bzw. die Einsteckmuffe ist vorzugsweise Bestandteil eines Anschlussverbinders, der mit seinem dem Muffenteil 17 gegenüberliegenden Ende an ein Aggregat oder an eine Rohrleitung anschließbar ist.

Wie beispielsweise in Figur 1 dargestellt ist, kann die Fluidleitung 1 mit ihrem Einsteckabschnitt 6 in dem Steckverbinder 8 derart weit eingesteckt sein, dass ihr Ende im Bereich in Einsteckrichtung X hinter dem Rastfortsatz 12 liegt, d. h. das Ende der Fluidleitung 1 liegt im Bereich des Kupplungsabschnitts 9 des Steckverbinders 8. Hierdurch wird einerseits eine mechanisch stabile Verbindung zum Steckverbinder 8 und andererseits auch eine gute Wärmeeinleitung von der Fluidleitung 1 in den Steckverbinder 8 bewirkt.

In Fig. 2 ist eine Ausführung dargestellt, bei der die Fluidleitung 1 mit ihrem Einsteckabschnitt 6 im Bereich des Verbindungsabschnitts 10 endet. Um insbesondere in diesem Fall eine gute Wärmeeinleitung zu erreichen, kann es zweckmäßig sein, eine Wärmeleithülse 18a in das Ende der Fluidleitung 1 hineinzuschieben, die sich bis in den Kupplungsabschnitt 9 erstreckt, gegebenenfalls bis zum freien Ende des Steckverbinders 8.

Beim Einschieben der Fluidleitung 1 bis in den Kupplungsabschnitt 9 des Steckverbinders 8, siehe Fig. 1, kann es zweckmäßig sein, dass eine Laserverschweißung 5 zwischen dem Steckverbinder 8 und der Fluidleitung 1 im Endbereich der Fluidleitung 1 und eine weitere Laserverschweißung 5 im Bereich des Verbindungsabschnitts 10 des Steckverbinders 8 vorhanden ist, siehe Fig. 4. Hierdurch wird das Eindringen eines Fluids unmittelbar am Ende der eingesteckten Fluidleitung verhindert und eine gute mechanische Stabilität erreicht.

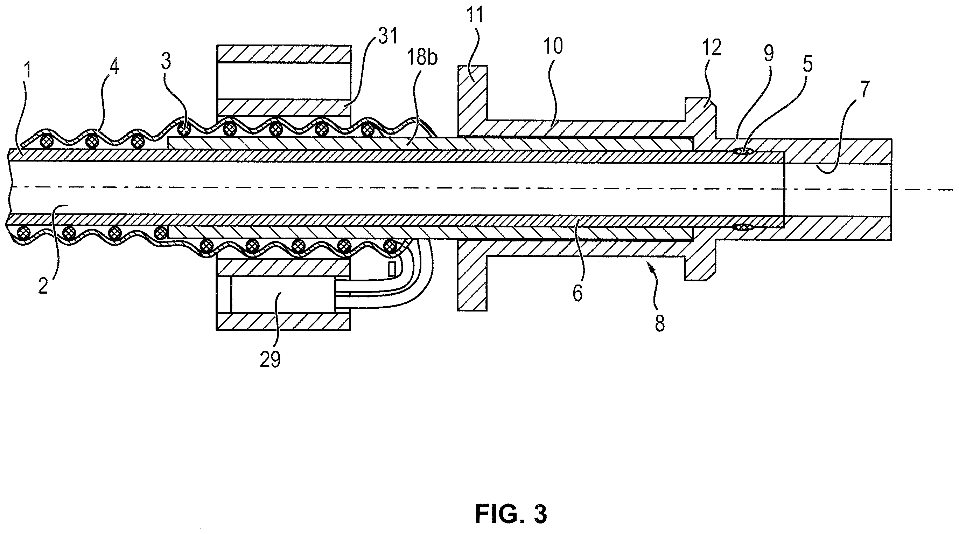

Es ist ebenfalls möglich, wie aus Fig. 3 zu ersehen ist, wenn eine Wärmeleithülse 18b auf der Außenseite der Fluidleitung 1 angeordnet ist, die sich zum Beispiel von dem mit der Heizeinrichtung 3 versehenen Endabschnitt der Fluidleitung 1 bis in den Kupplungsabschnitt 9 des Steckverbinders 8 erstrecken kann. Hierdurch ergibt sich eine gute Beheizung des Steckverbinders 8, wobei es von Vorteil ist, wenn sich die Heizeinrichtung 3 unter einer Clipanordnung 31 zum Befestigen eines elektrischen Anschlussverbinders hindurch erstreckt. Hierdurch wird eine großflächige Beheizung der Fluidleitung 1 bis zum Halteflansch 11 erreicht.

Damit eine Eignung für eine Laserverschweißung 5 zwischen dem Steckverbinder 8 und der Fluidleitung 1 gegeben ist, besteht der Steckverbinder 8 zumindest im Bereich der Laserschweißstellen aus einem lasertransparenten Material.

Es ist ein Schutzgehäuse 24 vorhanden, das die Fluidleitung 1 im Bereich vor dem Verbindungsabschnitt 10 des Steckverbinders 8 umschließt. Im Innern des Schutzgehäuses 24 endet die elektrische Heizeinrichtung 3 der Fluidleitung 1, wobei die elektrische Heizeinrichtung 3, zum Beispiel bestehend aus einzelnen Heizdrähten mittels eines elektrischen Verbinders 29, insbesondere eines Crimpverbinders, im Schutzgehäuse 24 endseitig miteinander verbunden sind. Der elektrische Verbinder 29 kann zum Beispiel in einer Aufnahmekammer 26 des Schutzgehäuses 24 gehalten sein, zum

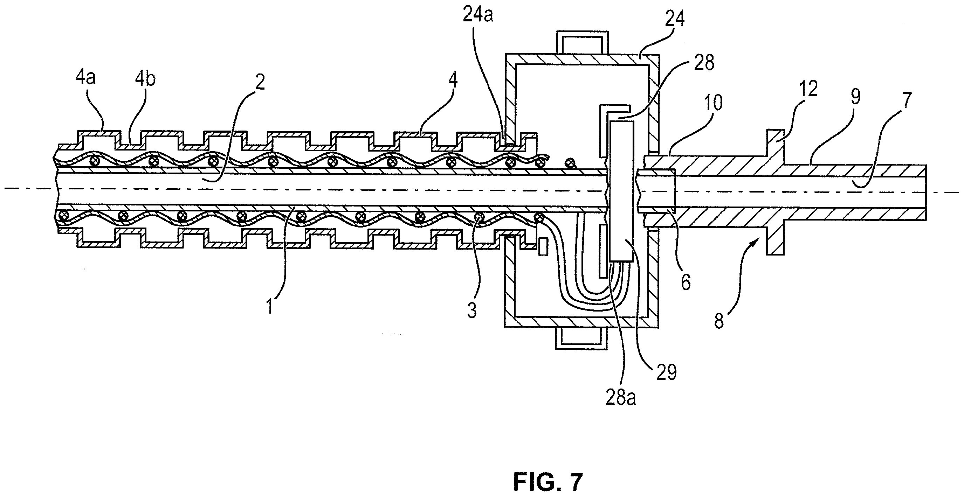

Beispiel parallel zur Fluidleitung 1. Es ist ebenfalls möglich, wenn der elektrische Verbinder 29 mittels einer Haltevorrichtung parallel zur Fluidleitung 1 an deren Umfang fixiert ist. Alternativ kann der elektrische Verbinder 29 auch senkrecht zur Längsachse im Bereich des Halteflansches 11 angeordnet sein, wodurch sich eine äußerst kompakte Ausführung des Schutzgehäuses 24 ergibt, siehe Fig. 7.

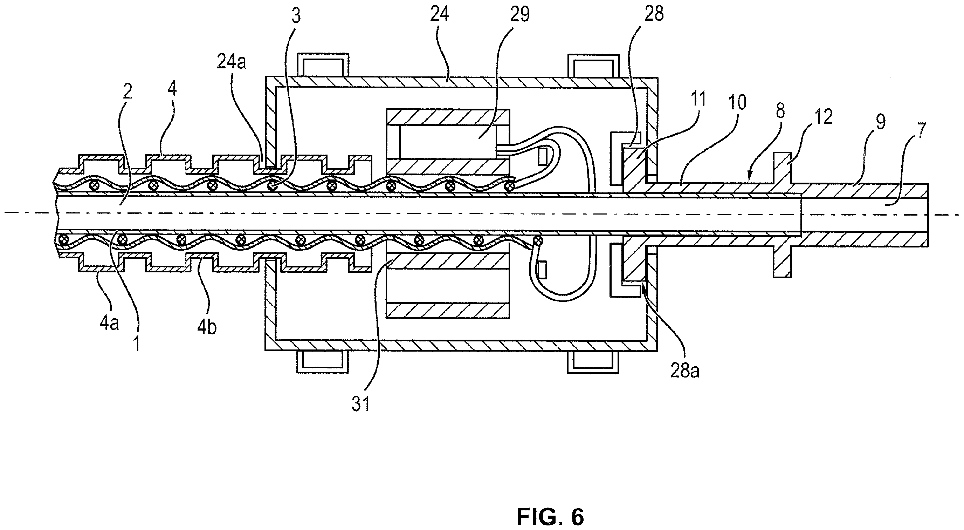

Das Schutzgehäuse 24 weist eine innere Lagerkammer 28 an seinem dem Steckverbinder 8 zugekehrten Gehäuseende auf. Die Lagerkammer 28 ist derart ausgebildet und angeordnet, dass der Halteflansch 11 des Steckverbinders 8 hierin formschlüssig gehalten wird, so dass ein Festlager 28a ausgebildet ist. Der Halteflansch 11 hat eine senkrecht zur Längsachse Y-Y des Steckverbinders 8 verlaufende Ausrichtung. Es ist zweckmäßig, wenn das Schutzgehäuse 24 an seinem der Lagerkammer 28 gegenüberliegenden Gehäuseende auf dem Mantelrohr 4 in axialer Richtung X mit axialem und vertikalem Spiel gelagert ist, so dass ein Loslager 24a ausgebildet ist. Hierzu ist es von Vorteil, wenn das Mantelrohr 4 als Ring-Wellrohr ausgebildet ist. Ein derartiges Ring-Wellrohr weist in axialer Richtung X in stetiger Folge abwechselnd hintereinander ausgebildete ringförmige Wellenberge 4a und ringförmige Wellentäler 4b auf. Zur Lagerung ist das Schutzgehäuse 24 an seinem Endbereich mit seiner das eingeführte Mantelrohr 4 umfassenden Einführöffnung zwischen zwei Wellenbergen 4a angeordnet. Somit ergibt sich die Ausbildung als Loslager 24a, siehe Fig. 1, 2, 6, 7 und 8.

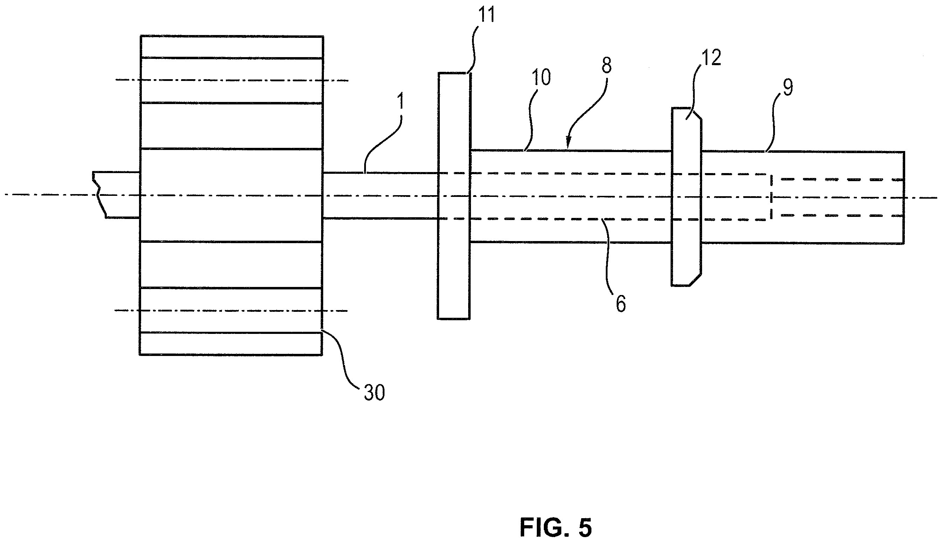

Es kann ebenfalls von Vorteil sein, wenn am Steckverbinder 8 vor dem Halteflansch 11 eine Clipanordnung 30 zum Befestigen des elektrischen Verbinders 29 einstückig, insbesondere als integraler Bestandteil des Steckverbinders 8, angeformt ist, siehe Fig. 5. Der elektrische Verbinder 29 kann auch zum Beispiel an einer Clipanordnung 31 bzw. einem Halteclip befestigt sein, wobei diese Clipanordnung 31 beispielsweise als C-Clip ausgebildet sein kann, siehe Fig. 3, und auf dem Mantelrohr 4 befestigt ist.

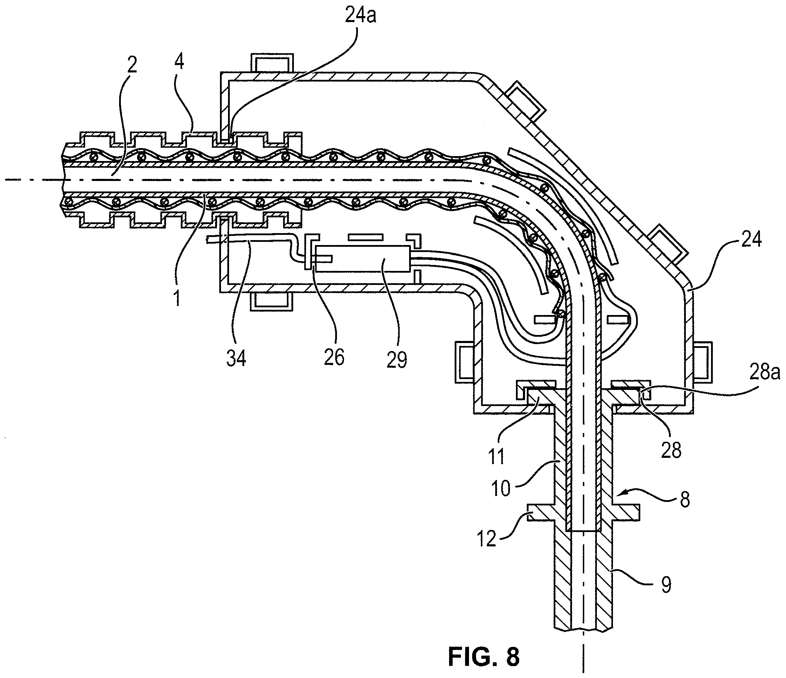

Das Schutzgehäuse 24 kann auch als Winkel-Formteil geformt sein, wenn zum Beispiel die Fluidleitung 1 im Bereich vor dem Steckverbinder 8 einen gebogenen Verlauf aufweist, siehe Fig. 8.

Zwischen dem Schutzgehäuse 24 und dem Muffenteil 17 ist ein elastisch verformbarer Isolationsring 33 zweckmäßigerweise angeordnet. Hierdurch kann nach dem Einstecken eine axiale Vorspannung erzeugt werden.

Das Schutzgehäuse 24 besteht vorzugsweise aus zwei Gehäusehälften, die im geschlossenen Zustand des Schutzgehäuses 24 durch Rastverbindungen miteinander verbindbar bzw. verbunden sind. Am Umfang des Schutzgehäuses 24 können Griffelemente 32 ausgebildet sein. In das Schutzgehäuse 24 kann zum Beispiel eine Versorgungsleitung 34 eingeführt sein, die die Heizeinrichtung 3 mittels des elektrischen Verbinders 29 mit elektrischer Spannung versorgt, siehe Fig. 8. Die Heizeinrichtung 3 der Fluidleitung 1 kann auch aus elektrischen Heizbändern gebildet sein.

Die Erfindung ist nicht auf die dargestellten und beschriebenen Ausführungsbeispiele beschränkt.

### Bezugszeichenliste

- 1: Fluidleitung
- 2: Durchflusskanal
- 3: Heizeinrichtung
- 4: Mantelrohr
- 5: Laserschweißung
- 6: Einsteckabschnitt
- 7: Innerer Durchgangskanal
- 8: Steckverbinder
- 9: Kupplungsabschnitt
- 10: Verbindungsabschnitt
- 11: Halteflansch
- 12: Rastfortsatz
- 13: Schräge
- 14: Stirnfläche
- 15: Einführungsschräge
- 17: Muffenteil
- 17a: Anschlag
- 18: Durchgangsöffnung
- 18a: Wärmeleithülse
- 18b: Wärmeleithülse
- 19: Rastabschnitt
- 20: Dichtabschnitt
- 21: Rastmittel
- 22: Übersteckbereich
- 23: Freiraum
- 24: Schutzgehäuse
- 24a: Loslager
- 25: Umfangsdichtung
- 26: Aufnahmekammer
- 28: Lagerkammer
- 28a: Festlager
- 29: Elektrischer Verbinder
- 30: Clipanordnung
- 31: Halteclip
- 32: Griffelemente
- 33: Isolationsring
- 34: Versorgungsleitung

- X: Einsteckrichtung
- Y-Y: Mittlere Längsachse

## Patentansprüche

1. Konfektionierte Fluidleitung, umfassend eine Fluidleitung (1) aus Kunststoff mit einem inneren Durchflusskanal (2) mit einer an ihrem Umfang in Längsrichtung angeordneten Heizeinrichtung (3), wobei die Fluidleitung (1) in einem sie umgebenden Mantelrohr (4) angeordnet ist, sowie endseitig an der Fluidleitung (1) ein Anschlussverbinder angeschlossen ist, wobei der Anschlussverbinder als Steckverbinder (8) aus Kunststoff ausgebildet ist und mittels eines endseitigen rohrförmigen Kupplungsabschnitts (9) in ein Muffenteil (17) lösbar einsteckbar ist, wobei die Fluidleitung (1) mit ihrem heizeinrichtungsfreien endseitigen Einsteckabschnitt (6) in einen Durchgangskanal (7) des Steckverbinders (8) mindestens im Bereich eines Verbindungsabschnitts (10) des Steckverbinders (8) eingesteckt ist und mittels einer Laserschweißung (5) der Steckverbinder (8) mit der Fluidleitung (1) im Bereich ihres Einsteckabschnitts (6) verbunden ist, wobei ein Halteflansch (11) innerhalb eines Schutzgehäuses (24) in Form eines Festlagers (28a) fixiert ist, und das Schutzgehäuse (24) das Mantelrohr (4) endseitig sowie die Fluidleitung (1) mit der auf ihr befindlichen Heizeinrichtung (3) im Bereich vor dem Einsteckabschnitt (6) umschließt, wobei der Steckverbinder (8) seinem Kupplungsabschnitt (9) in Einsteckrichtung (X) gesehen unmittelbar vorgeordnet den Verbindungsabschnitt (10) aufweist, der an seinem in Einsteckrichtung (X) gesehen vorderen Ende den zu einer mittleren Längsachse (Y-Y) des Steckverbinders (8) senkrecht ausgebildeten Halteflansch (11) aufweist, sowie im Bereich seines Kupplungsabschnitts (9) einen senkrecht zur mittleren Längsachse (Y-Y) stehenden Rastfortsatz (12), der Rastmittel (21) des Muffenteils (17) in seinem im Muffenteil (17) eingesteckten Zustand des Kupplungsabschnitts (9) hintergreift.

2. Konfektionierte Fluidleitung nach Anspruch 1,
**dadurch gekennzeichnet, dass** der Halteflansch (11) in einer Lagerkammer (28) des Schutzgehäuses (24) umfangsgemäß und axial formschlüssig fixiert ist, und die Lagerkammer (28) in Einsteckrichtung gesehen unmittelbar an der dem Steckverbinder (8) zugekehrten Gehäuseseite des Schutzgehäuses (24) ausgebildet ist.

3. Konfektionierte Fluidleitung nach Anspruch 1 oder 2,
**dadurch gekennzeichnet, dass** der Verbindungsabschnitt (10) in Einsteckrichtung (X) gesehen unmittelbar hinter dem Halteflansch (11) aus dem Schutzgehäuse (24) austritt und das Schutzgehäuse (24) am gegenüberliegenden Ende das Mantelrohr (4) in Form eines Loslagers (24a) umfasst.

4. Konfektionierte Fluidleitung nach einem der Ansprüche 1 bis 3,
**dadurch gekennzeichnet, dass** die Länge des Verbindungsabschnitts (10) gleich dem axialen Abstand zwischen der an dem Halteflansch (11) angrenzenden Gehäusewand des Schutzgehäuses (24) und dem Anfang des Kupplungsabschnitts (9) des Steckverbinders (8) ist, der mindestens gleich der axialen Länge eines Übersteckbereiches (22) des Muffenteils (17) im Bereich ihres Rastabschnitts (19) ist.

5. Konfektionierte Fluidleitung nach einem der Ansprüche 1 bis 4,
**dadurch gekennzeichnet, dass** der Einsteckabschnitt (6) der Fluidleitung (1) innerhalb des Verbindungsabschnitts (10) endet.

6. Konfektionierte Fluidleitung nach einem der Ansprüche 1 bis 4,
**dadurch gekennzeichnet, dass** der Einsteckabschnitt (6) innerhalb des Kupplungsabschnitts (9) des Steckverbinders (8) endet.

7. Konfektionierte Fluidleitung nach Anspruch 6,
**dadurch gekennzeichnet, dass** der Einsteckabschnitt (6) in dem Steckverbinder (8) im Bereich des Kupplungsabschnitts (9) in Einsteckrichtung (X) gesehen hinter dem Rastfortsatz (12) endet.

8. Konfektionierte Fluidleitung nach Anspruch 6 oder 7,
**dadurch gekennzeichnet, dass** die Laserschweißung (5) im Bereich des Kupplungsabschnitts (9) ausgebildet ist.

9. Konfektionierte Fluidleitung nach Anspruch 7,
**dadurch gekennzeichnet, dass** der Steckverbinder (8) mit dem Einsteckabschnitt (6) im Bereich des Verbindungsabschnitts (10) und im Bereich des Kupplungsabschnitts (9) hinter dem Rastfortsatz (12) durch eine Laserschweißung (5) verbunden ist.

10. Konfektionierte Fluidleitung nach Anspruch 9,
**dadurch gekennzeichnet, dass** zwischen dem Einsteckabschnitt (6) der Fluidleitung (1) und dem Steckverbinder (8) im Bereich vor dem Rastfortsatz (12) eine Spielpassung und im in Einsteckrichtung (X) sich anschließenden Bereich eine Presspassung ausgebildet ist.

11. Konfektionierte Fluidleitung nach einem der Ansprüche 1 bis 10,
**dadurch gekennzeichnet, dass** innerhalb des Schutzgehäuses (24) ein elektrischer Verbinder (29) zum Verbinden der freien Enden einer die Heizeinrichtung (3) bildenden Heizdrahtwicklung angeordnet ist.

12. Konfektionierte Fluidleitung nach Anspruch 11,
**dadurch gekennzeichnet, dass** mittels des elektrischen Verbinders (29) eine in das Schutzgehäuse (24) eingeführte elektrische Versorgungsleitung (34) an die Heizeinrichtung (3) angeschlossen ist.

13. Konfektionierte Fluidleitung nach einem der Ansprüche 11 oder 12,
**dadurch gekennzeichnet, dass** der elektrische Verbinder (29) mittels eines Halteclips (31) am Umfang der Fluidleitung (1) oder in einer Aufnahmekammer (26) oder in paralleler oder senkrechter Ausrichtung zur Längsachse der Fluidleitung (1) gehalten ist.

14. Konfektionierte Fluidleitung nach einem der Ansprüche 1 bis 13,
**dadurch gekennzeichnet, dass** der Kupplungsabschnitt (9) des Steckverbinders (8) innerhalb des Muffenteils (17) bzw. der Einsteckmuffe im Dichtabschnitt (20) durch eine Umfangsdichtung (25) abgedichtet ist.

15. Konfektionierte Fluidleitung nach Anspruch 14,
**dadurch gekennzeichnet, dass** dem Dichtabschnitt (20) ein Rastabschnitt (19) in dem Muffenteil (17) vorgeordnet ist und die axiale Länge des Rastabschnitts (19) und des Dichtabschnitts (20) kleiner/gleich der axialen Länge des Kupplungsabschnitts (9) des Steckverbinders (8) ist.

16. Konfektionierte Fluidleitung nach einem der Ansprüche 1 bis 15,
**dadurch gekennzeichnet, dass** der Innendurchmesser des Steckverbinders (8) im Einsteckbereich des Einsteckabschnitts (6) der Fluidleitung (1) um die zweifache Dicke der Wandung der Fluidleitung (1) gegenüber dem Innendurchmesser im übrigen Bereich des Steckverbinders (8) vergrößert ist, so dass ein durchgehend gleich großer Strömungsquerschnitt ausgebildet ist.

17. Konfektionierte Fluidleitung nach einem der Ansprüche 1 bis 16,
**dadurch gekennzeichnet, dass** innerhalb des Durchflusskanals (2) der Fluidleitung (1) zumindest im Bereich des Einsteckabschnitts (6) eine Wärmeleithülse (18a) eingesteckt ist.

18. Konfektionierte Fluidleitung nach einem der Ansprüche 1 bis 16,
**dadurch gekennzeichnet, dass** am Außenumfang der Fluidleitung (1) eine Wärmeleithülse (18b) angeordnet ist, die unterhalb der Heizeinrichtung (3) der Fluidleitung (1) beginnt und sich bis zu dem Rastfortsatz (12) des Kupplungsabschnitts (9) erstreckt.

19. Konfektionierte Fluidleitung nach einem der Ansprüche 1 bis 18,
**dadurch gekennzeichnet, dass** am Umfang des Verbindungsabschnitts (10) zwischen dem Muffenteil (17) und dem Schutzgehäuse (24) ein elastisch verformbarer Isolationsring (33) unter axialer Vorspannung angeordnet ist.

## Claims

1. Preassembled fluid line, comprising a fluid line (1) made of plastic with an internal flow duct (2) with a heating device (3) arranged around its circumference in the longitudinal direction, wherein the fluid line (1) is arranged in a casing tube (4) surrounding it and a terminal connector is connected to the fluid line (1) at the end, wherein the terminal connector is formed as a plug connector (8) made of plastic and can be inserted detachably into a sleeve part (17) by means of a tubular coupling section (9) at its end, wherein the fluid line (1) is inserted with its insertion section (6) that is free of the heating device at its end into a through-channel (7) of the plug connector (8), at least in the region of a connecting section (10) of the plug connector (8), and the plug connector (8) is connected to the fluid line (1) in the region of its insertion section (6) by means of a laser weld (5), wherein a retaining flange (11) is fixed within a protective housing (24) in the form of a fixed bearing (28a), and the protective housing (24) encloses the casing tube (4) at the end and the fluid line (1) with the heating device (3) located thereon in the region upstream of the insertion section (6), wherein, as viewed in the insertion direction (X), the plug connector (8) has its coupling section (9) arranged directly in front of the connecting section (10), the connecting section (10) having the retaining flange (11) formed perpendicular to a central longitudinal axis (Y-Y) of the plug connector (8) at its front end as viewed in the insertion direction (X) and, in the region of its coupling section (9), a latching extension (12) which is perpendicular to the central longitudinal axis (Y-Y) and which engages behind the latching means (21) of the sleeve part (17) when the coupling section (9) has been inserted into the sleeve part (17).

2. Preassembled fluid line according to Claim 1, **characterized in that** the retaining flange (11) is fixed circumferentially and axially in a form-fitting manner in a bearing chamber (28) of the protective housing (24), and, as viewed in the insertion direction, the bearing chamber (28) is formed directly on the housing side of the protective housing (24) that faces the plug connector (8) .

3. Preassembled fluid line according to Claim 1 or 2, **characterized in that** as viewed in the insertion direction (X), the connecting section (10) emerges from the protective housing (24) directly behind the retaining flange (11) and, at the opposite end, the protective housing (24) encloses the casing tube (4) in the form of a loose bearing (24a).

4. Preassembled fluid line according to one of Claims 1 to 3,
**characterized in that** the length of the connecting section (10) is equal to the axial distance between the housing wall of the protective housing (24) adjoining the retaining flange (11) and the start of the coupling section (9) of the plug connector (8), which is at least equal to the axial length of a push-over region (22) of the sleeve part (17) in the region of its latching section (19) .

5. Preassembled fluid line according to one of Claims 1 to 4,
**characterized in that** the insertion section (6) of the fluid line (1) ends within the connecting section (10).

6. Preassembled fluid line according to one of Claims 1 to 4,
**characterized in that** the insertion section (6) ends within the coupling section (9) of the plug connector (8) .

7. Preassembled fluid line according to Claim 6, **characterized in that** the insertion section (6) in the plug connector (8) in the region of the coupling section (9) ends behind the latching extension (12), as viewed in the insertion direction (X).

8. Preassembled fluid line according to Claim 6 or 7, **characterized in that** the laser weld (5) is formed in the region of the coupling section (9).

9. Preassembled fluid line according to Claim 7, **characterized in that** the plug connector (8) is connected to the insertion section (6) in the region of the connecting section (10) and in the region of the coupling section (9) behind the latching extension (12) by a laser weld (5).

10. Preassembled fluid line according to Claim 9, **characterized in that** a clearance fit is formed between the insertion section (6) of the fluid line (1) and the plug connector (8) in the region before the latching extension (12), and a press fit in the region following in the insertion direction (X).

11. Preassembled fluid line according to one of Claims 1 to 10,
**characterized in that** an electrical connector (29) for connecting the free ends of a heating wire winding forming the heating device (3) is arranged within the protective housing (24).

12. Preassembled fluid line according to Claim 11, **characterized in that** an electrical supply line (34) inserted into the protective housing (24) is connected to the heating device (3) by means of the electrical connector (29).

13. Preassembled fluid line according to either of Claims 11 and 12,
**characterized in that** the electrical connector (29) is held by means of a holding clip (31) on the circumference of the fluid line (1) or in a receiving chamber (26) or in a parallel or perpendicular alignment with respect to the longitudinal axis of the fluid line (1).

14. Preassembled fluid line according to one of Claims 1 to 13,
**characterized in that** the coupling section (9) of the plug connector (8) is sealed off within the sleeve part (17) or the insertion sleeve by a circumferential seal (25) in the sealing section (20).

15. Preassembled fluid line according to Claim 14, **characterized in that** a latching section (19) in the sleeve part (17) is arranged in front of the sealing section (20), and the axial length of the latching section (19) and of the sealing section (20) is less than/equal to the axial length of the coupling section (9) of the plug connector (8).

16. Preassembled fluid line according to one of Claims 1 to 15,
**characterized in that** the internal diameter of the plug connector (8) in the insertion region of the insertion section (6) of the fluid line (1) is enlarged with respect to the internal diameter in the remaining region of the plug connector (8) by twice the thickness of the wall of the fluid line (1), so that a continuously equally large flow cross section is formed.

17. Preassembled fluid line according to one of Claims 1 to 16,
**characterized in that** a thermally conductive sleeve (18a) is inserted within the flow duct (2) of the fluid line (1), at least in the region of the insertion section (6).

18. Preassembled fluid line according to one of Claims 1 to 16,
**characterized in that** a thermally conductive sleeve (18b) which begins underneath the heating device (3) of the fluid line (1) and extends up to the latching extension (12) of the coupling section (9) is arranged on the outer circumference of the fluid line (1).

19. Preassembled fluid line according to one of Claims 1 to 18,
**characterized in that** between the sleeve part (17) and the protective housing (24), an elastically deformable insulating ring (33) is arranged under axial preload on the circumference of the connecting section (10).

## Revendications

1. Conduite de fluide préassemblée, comprenant une conduite de fluide (1) en matière synthétique dotée d'un canal d'écoulement (2) intérieur pourvu d'un dispositif de chauffage (3) disposé dans la direction longitudinale à sa périphérie, la conduite de fluide (1) étant disposée dans un tube d'enveloppe (4) l'entourant, et un connecteur de raccordement étant raccordé à la conduite de fluide (1) à une extrémité, le connecteur de raccordement étant réalisé sous forme de connecteur enfichable (8) en matière synthétique et pouvant être enfiché de manière amovible dans un élément formant manchon (17) au moyen d'une partie d'accouplement (9) tubulaire terminale, la conduite de fluide (1) étant enfichée, par sa partie d'enfichage (6) terminale dépourvue du dispositif de chauffage, dans un canal de passage (7) du connecteur enfichable (8) au moins dans la région d'une partie de liaison (10) du connecteur enfichable (8) et le connecteur enfichable (8) étant relié, par soudage au laser (5), à la conduite de fluide (1) dans la région de sa partie d'enfichage (6), une bride de retenue (11) étant fixée à l'intérieur d'un boîtier de protection (24) sous la forme d'un palier fixe (28a), et le boîtier de protection (24) entourant le tube d'enveloppe (4) à l'extrémité ainsi que la conduite de fluide (1) dotée du dispositif de chauffage (3) se trouvant sur celle-ci dans la région avant la partie d'enfichage (6), le connecteur enfichable (8) présentant la partie de liaison (10) immédiatement en amont de sa partie d'accouplement (9) vue dans le sens d'enfichage (X), laquelle partie de liaison présente, à son extrémité avant vue dans le sens d'enfichage (X), la bride de retenue (11) réalisée perpendiculairement à un axe longitudinal médian (Y-Y) du connecteur enfichable (8), et le connecteur enfichable présentant, dans la région de sa partie d'accouplement (9), une saillie d'encliquetage (12) qui est perpendiculaire à l'axe longitudinal médian (Y- Y) et qui vient en prise par l'arrière avec des moyens d'encliquetage (21) de l'élément formant manchon (17) dans l'état de la partie d'accouplement (9) enfiché dans l'élément formant manchon (17) .

2. Conduite de fluide préassemblée selon la revendication 1,
**caractérisée en ce que** la bride de retenue (11) est fixée dans une chambre de palier (28) du boîtier de protection (24) de manière périphérique et par engagement par complémentarité de formes axial, et la chambre de palier (28) est, vue dans le sens d'enfichage, formée immédiatement sur le côté du boîtier de protection (24) tourné vers le connecteur enfichable (8).

3. Conduite de fluide préassemblée selon la revendication 1 ou 2,
**caractérisée en ce que** la partie de liaison (10), vue dans le sens d'enfichage (X), sort du boîtier de protection (24) immédiatement après la bride de retenue (11) et le boîtier de protection (24) comprend, à l'extrémité opposée, le tube d'enveloppe (4) sous la forme d'un palier libre (24a).

4. Conduite de fluide préassemblée selon l'une des revendications 1 à 3,
**caractérisée en ce que** la longueur de la partie de liaison (10) est égale à la distance entre la paroi du boîtier de protection (24) adjacente à la bride de retenue (11) et le début de la partie d'accouplement (9) du connecteur enfichable (8), qui est au moins égale à la longueur axiale d'une région d'emboîtement (22) de l'élément formant manchon (17) dans la région de sa partie d'encliquetage (19).

5. Conduite de fluide préassemblée selon l'une des revendications 1 à 4,
**caractérisée en ce que** la partie d'enfichage (6) de la conduite de fluide (1) se termine à l'intérieur de la partie de liaison (10).

6. Conduite de fluide préassemblée selon l'une des revendications 1 à 4,
**caractérisée en ce que** la partie d'enfichage (6) se termine à l'intérieur de la partie d'accouplement (9) du connecteur enfichable (8).

7. Conduite de fluide préassemblée selon la revendication 6,
**caractérisée en ce que** la partie d'enfichage (6) se termine dans le connecteur enfichable (8) dans la région de la partie d'accouplement (9) après la saillie d'encliquetage (12), vu dans le sens d'enfichage (X).

8. Conduite de fluide préassemblée selon la revendication 6 ou 7,
**caractérisée en ce que** le soudage au laser (5) est réalisé dans la région de la partie d'accouplement (9).

9. Conduite de fluide préassemblée selon la revendication 7,
**caractérisée en ce que** le connecteur enfichable (8) est relié par un soudage au laser (5) à la partie d'enfichage (6) dans la région de la partie de liaison (10) et après la saillie d'encliquetage (12) dans la région de la partie d'accouplement (9).

10. Conduite de fluide préassemblée selon la revendication 9,
**caractérisée en ce qu'**un ajustement avec jeu est réalisé dans la région avant la saillie d'encliquetage (12) et un ajustement serré est réalisé dans la région adjacente dans le sens d'enfichage (X) entre la partie d'enfichage (6) de la conduite de fluide (1) et le connecteur enfichable (8).

11. Conduite de fluide préassemblée selon l'une des revendications 1 à 10,
**caractérisée en ce qu'**un connecteur électrique (29) servant à la connexion des extrémités libres d'un bobinage de filament chauffant formant le dispositif de chauffage (3) est disposé à l'intérieur du boîtier de protection (24).

12. Conduite de fluide préassemblée selon la revendication 11,
**caractérisée en ce qu'**une ligne d'alimentation électrique (34) introduite dans le boîtier de protection (24) est raccordée au dispositif de chauffage (3) au moyen du connecteur électrique (29).

13. Conduite de fluide préassemblée selon l'une des revendications 11 ou 12,
**caractérisée en ce que** le connecteur électrique (29) est retenu au moyen d'un clip de retenue (31) à la périphérie de la conduite de fluide (1) ou dans une chambre de logement (26) ou dans une orientation parallèle ou perpendiculaire à l'axe longitudinal de la conduite de fluide (1).

14. Conduite de fluide préassemblée selon l'une des revendications 1 à 13,
**caractérisée en ce que** la partie d'accouplement (9) du connecteur enfichable (8) est rendue étanche par le biais d'un joint d'étanchéité périphérique (25) à l'intérieur de l'élément formant manchon (17) ou du manchon enfichable dans la partie d'étanchéité (20).

15. Conduite de fluide préassemblée selon la revendication 14,
**caractérisée en ce qu'**une partie d'encliquetage (19) est disposée en amont de la partie d'étanchéité (20) dans l'élément formant manchon (17) et la longueur axiale de la partie d'encliquetage (19) et de la partie d'étanchéité (20) est inférieure ou égale à la longueur axiale de la partie d'accouplement (9) du connecteur enfichable (8).

16. Conduite de fluide préassemblée selon l'une des revendications 1 à 15,
**caractérisée en ce que** le diamètre intérieur du connecteur enfichable (8) dans la région d'enfichage de la partie d'enfichage (6) de la conduite de fluide (1) est augmenté du double de l'épaisseur de la paroi de la conduite de fluide (1) par rapport au diamètre intérieur dans la région restante du connecteur enfichable (8), de telle sorte qu'une section transversale d'écoulement constamment de même dimension soit réalisée.

17. Conduite de fluide préassemblée selon l'une des revendications 1 à 16,
**caractérisée en ce qu'**une douille thermoconductrice (18a) est enfichée à l'intérieur du canal de passage (2) de la conduite de fluide (1) au moins dans la région de la partie d'enfichage (6).

18. Conduite de fluide préassemblée selon l'une des revendications 1 à 16,
**caractérisée en ce qu'**une douille thermoconductrice (18b) est disposée à la périphérie externe de la conduite de fluide (1), laquelle douille commence en dessous du dispositif de chauffage (3) de la conduite de fluide (1) et s'étend jusqu'à la saillie d'encliquetage (12) de la partie d'accouplement (9).

19. Conduite de fluide préassemblée selon l'une des revendications 1 à 18,
**caractérisée en ce qu'**une bague d'isolation (33) déformable élastiquement est disposée sous précontrainte axiale entre l'élément formant manchon (17) et le boîtier de protection (24) à la périphérie de la partie de liaison (10) .
